# EUROPEAN PATENT APPLICATION

(11) **EP 4 450 898 A1**
(43) Date of publication of application: **23.10.2024**
(21) Application number: 24169884.4
(22) Date of filing: 12.04.2024
(51) Int. Cl.: F25B 41/26, F16K 11/065, F16K 27/04

(54) **PILOT OPERATED FOUR-WAY REVERSING SLIDER VALVE**

(30) Priority: 19.04.2023 DK PA202300335
(71) Applicant: Danfoss A/S, 6430 Nordborg (DK)
(72) Inventor: Van Beek, Johann, 6430 Nordborg (DK)
(74) Representative: Patentanwälte Olbricht Buchhold Keulertz

(57) **Abstract**

The present invention pertains to a pilot operated four-way reversing slider valve for a heat pump application, comprising an aluminium manifold with at least four fluid ports, wherein first three fluid ports are arranged at a first manifold subcomponent and a fourth fluid port is arranged at a second manifold subcomponent, wherein the outside of the manifold comprises outside portions of both manifold subcomponents, and wherein the two manifold subcomponents are joined to each other via a substance-to-substance bond.

## Description

The present invention pertains to a pilot operated four-way reversing slider valve for a heat pump application, comprising an aluminium manifold with at least four fluid ports, wherein first three fluid ports are arranged at a first manifold subcomponent and a fourth fluid port is arranged at a second manifold subcomponent, wherein the outside of the manifold comprises outside portions of both manifold subcomponents, and wherein the two manifold subcomponents are joined to each other via a substance-to-substance bond.

Pilot operated four-way reversing slider valves for heat pump applications are known from the art. During the manufacture and use of these valves, various problems may occur. The valves comprise a manifold with various fluid connections. The arrangement of these fluid connections may complicate the assembly of the manifold and the connection of peripheral components to the fluid connections. In order to ensure the pilot operation of the valve, intricate pilot conduits have to be provided. Furthermore, different subcomponents of the manifold have to be connected to each other in a tight manner.

The aim of the present invention is to provide an improved pilot operated four-way reversing slider valve, which overcomes the above-mentioned problems. This aim is achieved by the valve according to claim 1. Advantageous embodiments are subject to the dependent claims.

According to claim 1, a pilot operated four-way reversing slider valve for a heat pump application is provided. The valve comprises an aluminium manifold with at least four fluid ports, wherein first three fluid ports are arranged at a first manifold subcomponent and a fourth fluid port is arranged at a second manifold subcomponent. The first three fluid ports may be arranged opposite to the fourth fluid port. The outside of the manifold comprises outside portions of both manifold subcomponents. This means that both manifold subcomponents are visible from the outside and form at least a part of the outer shell of the manifold. The two manifold subcomponents are joined to each other via a substance-to-substance bond.

The substance-to-substance bond may be applied from the outside of the manifold and/or at least partially or entirely to adjacent outside surfaces of the manifold subcomponents.

The present invention provides a valve with a straight flow path for discharge flow in the most used operation mode. The manifold of the valve provides connection means for fluidly connecting the valve to functions such as sensor components to the high and low-pressure side of the valve. The pilot valve of the presently described valve may be a solenoid-operated actuator with corresponding pilot channels.

The presently described design of the valve makes it easy to hermetically seal the aluminium manifold or rather its main components using joining technologies such as laser and/or friction stir welding.

The present invention facilitates the integration of any required functions on high- and low-pressure sides around the manifold. It may make use of stir welding in combination with extruded and/or die cast aluminium parts.

In a preferred embodiment of the invention, the two manifold subcomponents are joined to each other via laser and/or friction stir welding, preferably via their outside surfaces. The joining process is significantly simplified, as it may be carried out on the easily accessible outside of the valve.

In another preferred embodiment of the invention, the two manifold subcomponents are extruded and/or pressure die cast. The extrusion and/or pressure die-casting takes place before the joining of the two subcomponents. The manifold my thus be produced by employing cost-efficient methods, thereby reducing the overall costs of the valve.

In another preferred embodiment of the invention, at least one of the two manifold subcomponents comprises connection ports for connecting the inside of the valve to sensor components. Preferably, only one of the two manifold subcomponents comprises the connection ports. The connection ports may be arranged on one side or on two sides of the manifold subcomponents. The connection ports may be arranged at least partially linearly with respect to one another. The connection ports may be arranged in a perpendicular direction to some or all of the fluid ports.

In another preferred embodiment of the invention, a drain channel is provided connecting the connection ports to each other and/or to the inside of the valve, wherein preferably the drain channel is formed integrally with at least one of the manifold subcomponent.

The drain channel may extend in an axial direction of the valve. The axial direction may be defined as the direction in which a slider of the valve is movable. The drain channel may be provided on the low-pressure side and/or on the high-pressure side of the valve. The drain channel may comprises fluidly separated channel portions. The drain channel may be provided for draining fluids such as oil away from e.g. sensor components. The valve may be oriented such that gravity acting on the fluid may be sufficient for keeping the fluid away from sensitive areas of the valve.

In another preferred embodiment of the invention, the second manifold subcomponent comprises a pilot channel, wherein preferably the pilot channel is formed integrally with the second manifold subcomponent. The pilot channel may be oriented in parallel to the drain channel and/or in the axial direction of the valve. The pilot channel connects the pilot to the slider fluidly, such that different pressure regimes can be applied to two opposite ends of the slider. The pilot channel may thus be integrated into the manifold, thereby reducing the number of required components and simplifying the design of the valve.

In another preferred embodiment of the invention, the inside of the second manifold subcomponent and the pilot channel are at least partially closed at their axial ends by axial caps. The axial caps may comprise a circular portion for closing the inside of the second manifold subcomponent. An additional portion, a radially outward pointing protrusion may be provided adjacent to and radially outward from the circular portion for closing the pilot channel.

In another preferred embodiment of the invention, the fourth fluid port is arranged coaxially to one of the first three fluid ports. The inside of the manifold between the fourth fluid port and the one of the first three fluid ports opposing the fourth fluid port may contain no other components than a part of the slider. Thus, the resistance to fluid flow between the two opposing fluid ports may be minimized.

In another preferred embodiment of the invention, a fifth fluid port is arranged at the second manifold subcomponent, preferably coaxially to another of the first three fluid ports. The fifth fluid port may be provided for connecting devices such as sensors to the inside of the manifold.

In another preferred embodiment of the invention, the manifold comprises connection geometries for connecting conduits to the fluid ports.

The connection geometries may be arranged in parallel to at least some of the fluid ports. They may comprise threaded portions and/or other connection such that brazing of conduits to the fluid ports can be avoided. The connection geometries may be provided using lock-ring technology and/or joining technologies such as magnetic pulse welding.

Further details and advantages of the invention are described with reference to the embodiment shown in the figures. The figures show:
Fig. 1 a sectional view of the pilot operated four-way reversing slider valve;
Fig. 2 another sectional view of the pilot operated four-way reversing slider valve;
Fig. 3 a detailed sectional view of the pilot operated four-way reversing slider valve; and
Fig. 4 a side view of the pilot operated four-way reversing slider valve.

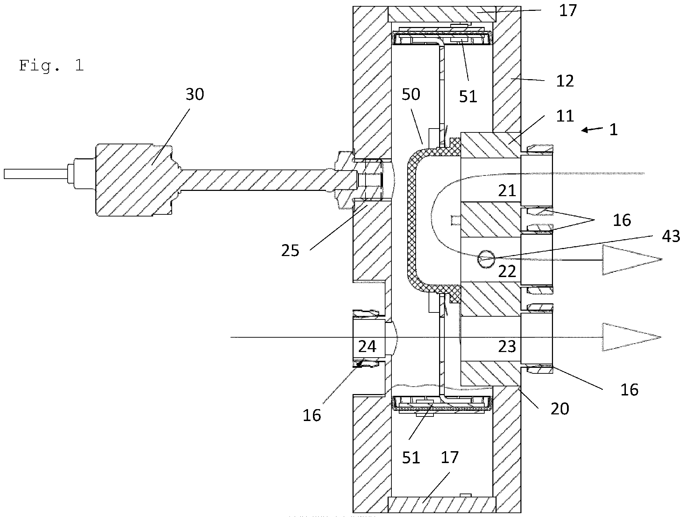

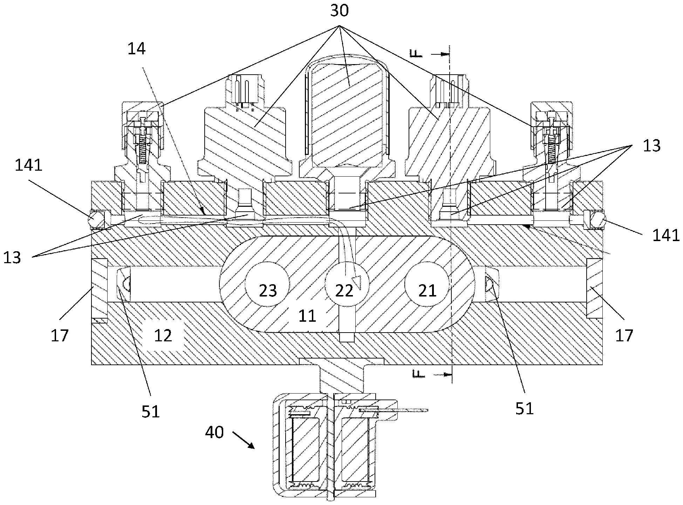

Figure 1 is a sectional view of the presently described four-way reversing slider valve. The four-way reversing slider valve is operated by a pilot 40 shown in figures 2 to 4. The valve is used with a heat pump application, which is not shown in the figures. The valve comprises an aluminium manifold 1 with at least four fluid ports 21, 22, 23, 24. The fluid ports 21, 22, 23, 24 are shown disconnected from any fluid systems of the heat pump application. The valve may typically be connected to a high-pressure and a low-pressure side of the heat pump application. For example, the fourth fluid port 24 may be connected to a high-pressure fluid side and the second fluid port 22 may be connected to a low-pressure fluid side.

The first three fluid ports 21, 22, 23 are arranged at a first manifold subcomponent 11 pointing to the right of figure 1. The first manifold subcomponent 11 forms part of the outside of the manifold 1. It may comprise a slider portion inside the second manifold subcomponent 12. The first three fluid ports 21, 22, 23 reach all the way to the slider portion.

The slider portion of the first manifold subcomponent 11 may interact with a slider 50 for setting the valve to different positions. The slider portion of the first manifold subcomponent 11 may provide a flat surface on the inside of the manifold 1, against which the slider 50 is forced by a pressure differential acting across the slider 50. The slider portion of the first manifold subcomponent 11 may be the innermost portion of the manifold 1.

The slider 50 moves in the vertical direction in figure 1, corresponding to the axial direction of the valve. The slider 50 is actuated by a pressure differential acting on its upper and lower piston portions 51.

The fourth fluid port 24 is arranged at the second manifold subcomponent 12. The first three fluid ports 21, 22, 23 may be arranged on a side of the manifold 1 opposite to the fourth fluid port 24. The outside of the manifold 1 comprises outside portions of both manifold subcomponents 11, 12. This means that both manifold subcomponents are visible from the outside and form at least a part of the outer shell of the manifold 1. The two manifold subcomponents 11, 12 are joined to each other via a substance-to-substance bond 20, such as welding.

The substance-to-substance bond 20 may be applied from the outside of the manifold 1 and/or at least partially to adjacent outside surfaces of the manifold subcomponents 11, 12. The substance-to-substance bond 20 may fully or partially surround the outside portions of the first three fluid ports 21, 22, 23.

The two manifold subcomponents 11, 12 may be joined to each other via laser welding and/or friction stir welding, preferably via their outside surfaces. The joining process is simplified, as it may be carried out on the easily accessible outside of the valve, corresponding to the right direction in figure 1.

The two manifold subcomponents 11, 12 may be extruded and/or pressure die cast. The extrusion and/or pressure die casting takes place before the combined state of the two subcomponents 11, 12 shown in figure 1 is achieved.

The fourth fluid port 24 is arranged coaxially to one of the first three fluid ports 21, 22, 23. In the embodiment of figure 1, the fourth 24 and the third fluid port 23 are arranged coaxially and opposite each other. The first two fluid ports 21, 22 are arranged next to each other, while the second fluid port 22 is arranged next to both, the first 21 and the third fluid port 23.

The inside of the manifold 1 between the fourth fluid port 24 and one of the first three fluid ports 21, 22, 23 opposing the fourth fluid port 24 may contain no other components than a part of the slider 50. Thus, the resistance to fluid flow between the two opposing fluid ports 24, 23 may be minimized.

A fifth fluid port 25 is arranged at the second manifold subcomponent 12, preferably coaxially to another of the first three fluid ports 21, 22, 23. The fifth fluid port 25 may be provided for fluidly connecting devices such as sensor components 30 to the inside of the manifold 1. Alternatively, sensor components 30 may be fluidly connected to the fourth fluid port 24, while the fifth fluid port 25 may communicate with some of the first three fluid ports 21, 22, 23.

The manifold 1 may be symmetrical or substantially symmetrical across a plane perpendicular to a plane defined by the fluid ports 21, 22, 23, 24, 25, that is symmetrical to a plane orthogonal to the axial direction of the manifold 1. Additionally or alternatively, the manifold 1 may be symmetrical across the plane defined by the fluid ports 21, 22, 23, 24, 25. The substantial symmetry may correspond to a symmetry, in which all or most of the connections of the manifold, such as its fluid ports, are arranged in a symmetrical way.

The manifold 1 comprises connection geometries 16 for connecting conduits to some or all of the fluid ports 21, 22, 23, 24, 25. The conduits are not shown in the figures. The connection geometries 16 may be arranged in parallel to at least some of the fluid ports 21, 22, 23, 24, 25. They may comprise threaded portions or other connection means for avoiding brazing of conduits to the fluid ports 21, 22, 23, 24, 25. They may comprise protrusions and/or recesses for interacting with the respective conduits.

The second fluid port 22 may comprise a third fluid channel 43 for connecting the second fluid port 22 to the pilot 40 shown in figures 2 to 4.

Figure 2 is another sectional view of the pilot operated four-way reversing slider valve. The second manifold subcomponent 12 comprises five connection ports 13 for connecting the inside of the valve to sensor components 30 and/or other peripheral devices and/or conduits. A different number of connection ports 13 and/or peripheral devices may be present. The connection ports 13 may be connected to the high-pressure side of the valve and/or to the high-pressure side of the heat pump application.

The first manifold subcomponent 11 is shown without any such additional connection ports 13. The connection ports 13 may be arranged on one side of the manifold subcomponents 11, 12. The connection ports 13 may be arranged linearly with respect to one each other. The connection ports 13 may be arranged in a perpendicular direction to some or all of the fluid ports 21, 22, 23, 24, 25.

The first manifold subcomponent 11 comprises the first three fluid ports 21, 22, 23. The fluid ports 21, 22, 23 are arranged linearly with respect to each other. They may be spaced apart at identical distances with respect to each other. The first manifold subcomponent 11 may be an insert, which is partially or fully inserted into the second manifold subcomponent 12. The first manifold subcomponent 11 may be inserted along a radial direction into the first manifold subcomponent 11. The radial direction may be perpendicular to the axial direction.

The first manifold subcomponent 11 may have semi-circular or curved side portions, preferably accommodating two first external fluid ports 21, 23. The side portions may be provided at axially opposing ends of the first manifold subcomponent 11.

The first manifold subcomponent 11 may have a rectangular central portion accommodating the second central fluid port 22. The rectangular central portion may be provided between the two side portions of the first manifold subcomponent 11. The first manifold subcomponent 11 may be positioned centrally within the second manifold subcomponent 12 in an axial direction of the valve. The axial direction corresponds to the horizontal direction in figure 2. The first manifold subcomponent 11 may be bound by two opposing straight and two opposing curved side portions.

A drain channel 14 is provided connecting the connection ports 13 fluidly to each other and/or to the inside of the valve. The drain channel 14 may be formed integrally with at least one of the manifold subcomponents 11, 12. The drain channel 14 may extend in an axial direction of the valve. The drain channel 14 may be a single linear channel or it may comprise a plurality of angled channel portions, connected to each other and/or the inside of the valve. The drain channel 14 may be integrated with the second manifold subcomponent 12. The drain channel 14 may extend in an axial direction of the second manifold subcomponent 12. It may be drilled into or extruded with the second manifold subcomponent 12. The drain channel 14 may be closed at its axial ends by closing portions 141.

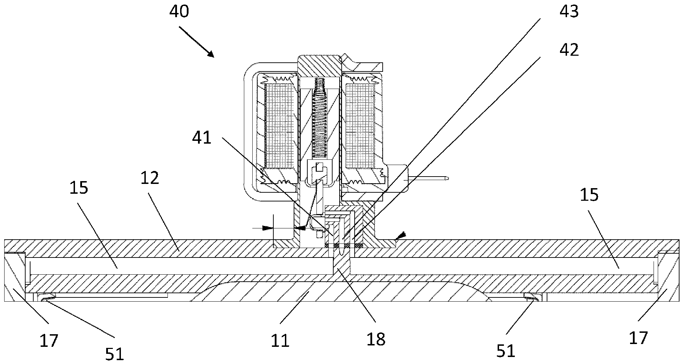

Figure 3 is a detailed sectional view of a portion of the valve. The second manifold subcomponent 12 is shown to comprise a pilot channel 15. The pilot channel 15 may be formed integrally with the second manifold subcomponent 12. The pilot channel 15 may be oriented in parallel to the drain channel 14 of figure 2. The pilot channel 15 may be arranged between the pilot 40 and the inside of the valve and/or the first manifold subcomponent 11. The pilot channel 15 may extend over the entire length or nearly the entire length of the second manifold subcomponent 12. The pilot channel 15 connects the pilot 40 to the slider 50 shown in figure 1 fluidly, such that different pressure regimes can be applied to two piston portions 51 at opposite ends of the slider 50 shown in figure 1.

The pilot channel 15 may comprise two separated sub-channels, one leading to one end of the slider 50 and the other sub-channel to its other end. The pilot channel 15 may comprise a radial connection portion for fluidly connecting the axial portion of the pilot channel 15 to the piston portions 51 of the slider 50.

A separator 18 for separating the two sub-channels may be provided at the position of the pilot 40. The pilot 40 or pilot valve 40 may be connected to the second manifold subcomponent 12 in the same way as the first and second manifold subcomponents 11, 12 are connected to each other. For example, the pilot 40 may be friction stir weld to the second manifold subcomponent 12.

The pilot 40 may comprise two fluid channels, a first fluid channel 41 and a second fluid channel 42, each fluidly connected to one of the sub-channels of the pilot channel 15. The pilot 40 may comprise a third fluid channel 43, which may be fluidly connected to the low-pressure side of the valve. In particular, the third fluid channel 43 may be fluidly connected to the second fluid port 22. The pilot 40 may be flanged to the second manifold subcomponent 12 at the position of the separator 18.

The inside of the second manifold subcomponent 12 and the pilot channel 15 are at least partially closed at their axial ends by axial caps 17. The axial caps 17 may be connected to the second manifold subcomponent 12 in the same way as the first and second manifold subcomponents 11, 12 are connected to each other. The axial caps 17 may be arranged in symmetry to each other.

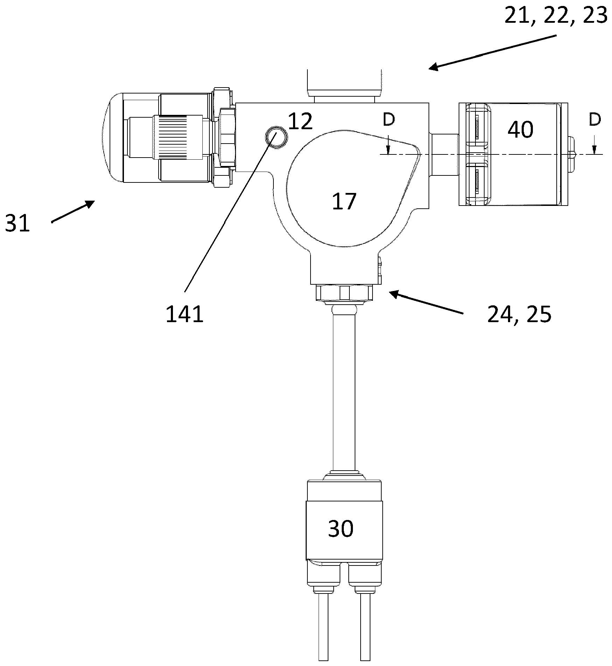

Figure 4 a side view of the pilot 40 operated four-way reversing slider valve. The pilot 40 is shown on the right side opposite to further sensor components 31. The first three fluid ports 21, 22, 23 are indicated at the top of the valve, while the fourth and fifth fluid ports 24, 25 are indicated opposite to the first three fluid ports 21, 22, 23 and at the bottom of the valve. The sensor components 30 may be arranged at the same side of the second manifold subcomponent 12 as the fourth and fifth fluid ports 24, 25.

Figure 4 shows that fluid ports 21, 22, 23, 24, 25 and accessories of the valve may be provided on its four sides and/or arranged in a perpendicular pattern with respect to each other.

A closing portion 141 for closing the drain channel 14 is shown at the axial end of the valve. The closing portion 141 is shown adjacent to the axial cap 17.

The axial caps 17 comprise a major circular portion for closing the inside of the second manifold subcomponent 12. A radially outward pointing protrusion may be provided adjacent to the circular portion for closing the pilot channel 15 shown in figure 3.

## Claims

1. Pilot 40 operated four-way reversing slider valve for a heat pump application, comprising an aluminium manifold 1 with at least four fluid ports 21, 22, 23, 24, wherein first three fluid ports 21, 22, 23 are arranged at a first manifold subcomponent 11 and a fourth fluid port 24 is arranged at a second manifold subcomponent 12, wherein the outside of the manifold 1 comprises outside portions of both manifold subcomponents 11, 12, and wherein the two manifold subcomponents 11, 12 are joined to each other via a substance-to-substance bond.

2. Slider valve according to claim 1, **characterized in that** the two manifold subcomponents 11, 12 are joined to each other via laser and/or friction stir welding, preferably via their outside surfaces.

3. Slider valve according to any of the previous claims, **characterized in that** the two manifold subcomponents 11, 12 are extruded and/or pressure die cast.

4. Slider valve according to any of the previous claims, **characterized in that** at least one of the two manifold subcomponents 11, 12 comprises connection ports 13 for connecting the inside of the valve to sensor components 30.

5. Slider valve according to the previous claim, **characterized in that** a drain channel 14 is provided connecting the connection ports 13 to each other and/or to the inside of the valve, wherein preferably the drain channel 14 is formed integrally with at least one of the manifold subcomponent 11, 12.

6. Slider valve according to any of the previous claims, **characterized in that** the second manifold subcomponent 12 comprises a pilot channel 15, wherein preferably the pilot channel 15 is formed integrally with the second manifold subcomponent 12.

7. Slider valve according to the previous claim, **characterized in that** the inside of the second manifold subcomponent 12 and the pilot channel 15 are at least partially closed at their axial ends by axial caps 17.

8. Slider valve according to any of the previous claims, **characterized in that** the fourth fluid port 24 is arranged coaxially to one of the first three fluid ports 21, 22, 23.

9. Slider valve according to the previous claim, **characterized in that** a fifth fluid port 25 is arranged at the second manifold subcomponent 12, preferably coaxially to another of the first three fluid ports 21, 22, 23.

10. Slider valve according to any of the previous claims, **characterized in that** the manifold 1 comprises connection geometries 16 for connecting conduits to the fluid ports 21, 22, 23, 24, 25.
